# EUROPEAN PATENT APPLICATION

(11) **EP 1 707 981 A2**
(43) Date of publication of application: **04.10.2006**
(21) Application number: 06251676.0
(22) Date of filing: 28.03.2006
(51) Int. Cl.: G01S 7/03, H04B 1/40, G01S 7/282

(54) **Transmitter-receiver module**

(30) Priority: 30.03.2005 JP 2005099291; 07.03.2006 JP 2006061346
(71) Applicant: KABUSHIKI KAISHA TOSHIBA, Tokyo 105-8001 (JP)
(72) Inventor: Kojima, Haruo c/o IP Division, Toshiba Corporation, Tokyo (JP)
(74) Representative: Maury, Richard Philip

(57) **Abstract**

A transmitter-receiver module includes a first amplifier, a second amplifier, a detection unit, and a control unit. The first amplifier is configured to amplify a transmitter signal, the second amplifier is configured to amplify a receiver signal, the detection unit is configured to detect the receiver signal amplified by the second amplifier, and the control unit is configured to control the first amplifier so as to reduce a level of the signal from the first amplifier when the signal detected by the detection unit exceeds a predetermined level.

## Description

### CROSS REFERENCE TO RELATED APPLICATION

This application is based upon and claims the benefit of priority from prior Japanese Patent Application No. 2005-099291 filed on March 30, 2005 and No. 2006-61346 filed on March 7, 2006, the entire contents of which are incorporated herein by reference.

### BACKGROUND OF THE INVENTION

### Field of The Invention

The present invention relates to a transmitter-receiver module particularly for use, for example, in an active phased-array antenna in a radar system.

### Related Art

A transmitter-receiver module includes a power amplifier of a transmitting system amplifying a transmitter signal, a low-noise amplifier of a receiving system amplifying a receiver signal, and a transmit-receive switch for switching transmission and reception, which are used for an active phased-array antenna, for example, that electrically control beam-scanning in a radar system. A model of a basic configuration of this type of transmitter-receiver modules is shown in Fig. 5.

Fig. 5 is a block diagram of an example showing the basic configuration of a conventional transmitter-receiver module. The transmitter-receiver module 100 shown in Fig. 5 includes a circulator 101 serving as a transmit-receive switch, a low-noise amplifier 102 that amplifies a receiver signal, and a power amplifier 103 that amplifies a transmitter signal.

The transmitter-receiver module 100 also includes a signal input/ output terminal 104 for transmitting a transmitter signal and a receiver signal, a receiver-signal output terminal 105 for transmitting an amplified receiver signal to a down-stage unit, and a transmitter-signal input terminal 106 for receiving a transmitter signal from an up-stage unit. The signal input/output terminal 104 connects to an antenna element 107 serving both as a transmitter and a receiver. The receiver-signal output terminal 105 and the transmitter-signal input terminal 106 is connected each to a phase shifter, not shown, for controlling the phase of a signal, for example.

During the transmission, a transmitter signal applied to the transmitter-signal input terminal 106 is amplified by the power amplifier 103, passes through the circulator 101 to the signal input/output terminal 104, and is sent to the antenna element 107. On the other hand, during the reception, a receiver signal received by the antenna element 107 passes from the signal input/output terminal 104 through the circulator 101 to the low-noise amplifier 102. Thereafter, the signal is amplified with low noise and sent from the receiver-signal output terminal 105 to a down-stage unit.

For example, when the transmitter-receiver module with such a configuration interfaces with the antenna elements of an active phased-array antenna having arrayed multiple antenna elements in a radar system, an excessive-level signal is sometimes inputted to a first-stage amplifier of the receiving system, such as the low-noise amplifier 102 in Fig. 5, in some radar-system operating environments. That is, this may occur at a time when a reflected signal from an object present in extremely close proximity is applied, or when the VSWR (Voltage Standing Wave Ratio) of an antenna system is increased by the interference between the arrayed multiple antenna elements to increase the reflection from the antenna elements themselves.

As a result, not only the first-stage amplifier of the receiving system does not achieve desired performance but also the amplifier elements is deteriorated or damaged.

In order to obviate such problems, the receiving system of the transmitter-receiver module has a protection circuit for particularly protecting the first-stage amplifier. An example of the transmitter-receiver module having such a protection circuit is disclosed, for example, in the Japanese Patent Laid-open Publication No. 2004-153653 (A). In the example disclosed in this publication, the protection circuit is constructed in such a way that a low-reflection limiter in which a limiter diode and a resistor are connected in series is interposed on the input side of the first-stage amplifier of the receiving system.

Incidentally, one of parameters indicative of the performance of radar systems is a maximum object-detection range. The maximum object-detection range is quantified with multiple factors including radar data and propagation loss. Radar systems are constructed so as to reduce the loss of various signals transferred among the units of the radar systems, particularly, transmitter signals and receiver signals, as much as possible, to thereby maintain those values, thus ensuring desired performance. The above-described transmitter-receiver module also needs to reduce the internal loss, particularly, for the receiver signals.

In the conventional transmitter-receiver module, however, the protection circuit for protecting the first-stage amplifier of the receiving system from excessive input has insertion loss. Accordingly, the insertion of the protection circuit increases losses in the receiver signals. In addition, the first-stage amplifier of the receiving system particularly has a low-noise index, and accordingly, when the foregoing protection circuit is interposed on the input side of the amplifier, the loss of the receiver signal increases to be equal to those when the noise index of the amplifier becomes worse, exerting an adverse influence to the performance of the radar system, such as a maximum object-detection range.

In a case where the transmitter-receiver module is arranged with an extremely small distance to an object to be measured (reflection object), disturbance in the antenna pattern is caused and the transmission load VSWR of the transmitter-receiver module is extremely deteriorated. In such a case, the transmission wave passing the circulator 101 is reflected by the antenna 107 and passes the circulator 101, which may deteriorate or destroy the low-noise amplifier 102. The possibility of destroy may be increased as the output of the transmission signal increases.

### SUMMARY OF THE INVENTION

According to a first aspect of the present invention, there is provided a transmitter-receiver module including a first amplifier, a second amplifier, a detection unit, and a control unit. The first amplifier is configured to amplify a transmitter signal, the second amplifier is configured to amplify a receiver signal, the detection unit is configured to detect the receiver signal amplified by the second amplifier, and the control unit is configured to control the first amplifier so as to reduce a level of the signal from the first amplifier when the signal detected by the detection unit exceeds a predetermined level.

In a modified aspect, the present invention provides a transmitter-receiver module comprising: a transmitter-receiver switch unit having transmitter signal port, receiver signal port and common signal port, in which a transmitter signal given to the transmitter signal port is sent to the common signal port at a time of transmission, and a receiver signal given to the common signal port is sent to the receiver signal port at a time of reception; a first amplifier connected, at an output side thereof, to the transmitter signal port of the transmit-receive switch unit and configured to amplify the transmitter signal; a comparison-drive unit including a variable attenuator connected to the input side of the first amplifier; a second amplifier connected, at an input side thereof, to the receiver signal port of the transmit-receive switch unit and configured to amplify the receiver signal; and a level monitor unit monitoring a level of the receiver signal at the input side of the second amplifier, wherein when a result of monitoring at the level monitor unit exceeds a preliminarily set level, the variable attenuator is controlled to increase an attenuation amount.

In a further aspect of the present invention, there is also provided a radar system comprising: a first amplifier configured to amplify a transmitter signal; a second amplifier configured to amplify a receiver signal; an antenna configured to transmit a signal amplified by the first amplifier and receive a receiver signal; a detection unit configured to detect the receiver signal amplified by the second amplifier; and a control unit configured to control the antenna so as to reduce a level of the signal from the antenna when the signal detected by the detection unit exceeds a predetermined level.

According to the present invention of the characters mentioned above, the first-stage amplifier of the signal receiving system can be protected with a little insertion loss.

### BRIEF DESCRIPTION OF THE DRAWINGS

A more complete application of embodiments of the present invention and many of its attendant advantages will be readily obtainable by reference to the following detailed description considered in connection with the accompanying drawings, in which:
Fig. 1 is a block diagram of a first embodiment of a transmitter-receiver module according to the present invention;
Fig. 2 is a block diagram of a second embodiment of a transmitter-receiver module according to the present invention;
Fig. 3 is a block diagram of a third embodiment of a transmitter-receiver module according to the present invention;
Fig. 4 is a modified embodiment of the present invention; and
Fig. 5 is a block diagram showing a basic configuration of a conventional transmitter-receiver module.

### DESCRIPTION OF THE PREFERRED EMBODIMENTS

The present invention will be described by way of preferred embodiments with reference to the accompanying drawings.

### [First Embodiment]

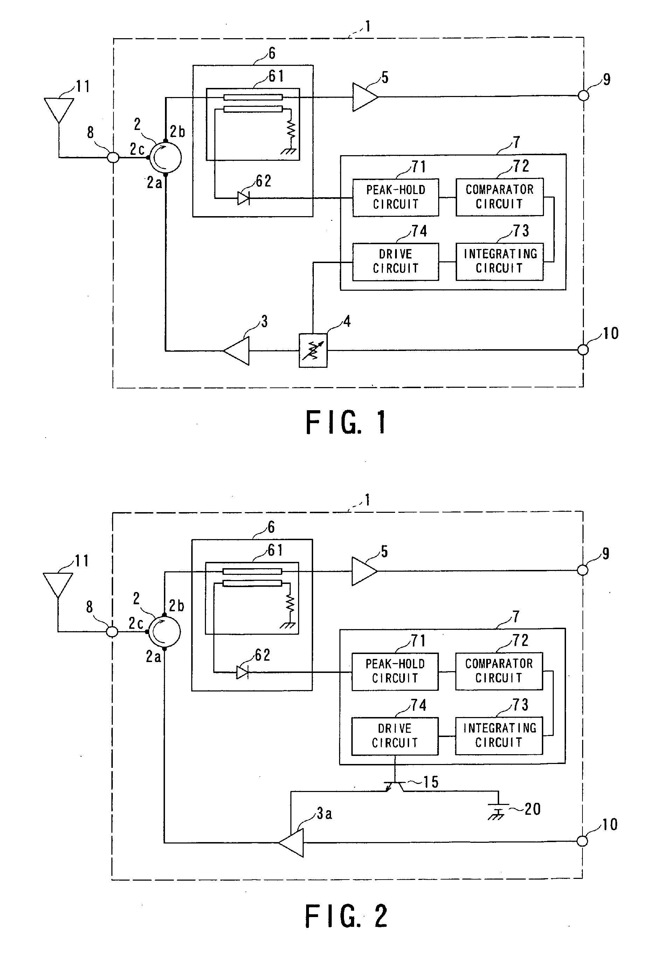

Fig. 1 is a block diagram of an embodiment of the transmitter-receiver module according to the first embodiment of the present invention. As shown in Fig. 1, the transmitter-receiver module 1 of this embodiment includes a circulator 2 serving as a transmit-receive switch, a power amplifier 3 serving as a first amplifier that amplifies a transmitter signal, a variable attenuator 4 connected to the input side of the power amplifier 3, a low-noise amplifier 5 serving as a second amplifier that amplifies a receiver signal, a level monitor unit 6 serving as a controller, and a comparison-drive unit 7.

The level monitor unit 6 includes a directional coupler 61 having little insertion loss and a detector 62. The comparison-drive unit 7 includes a peak-hold circuit 71, a comparator circuit 72, an integrating circuit 73, and a drive circuit 74.

The transmitter-receiver module 1 further includes a signal input/output terminal 8 for transferring a transmitter signal and a receiver signal, a receiver-signal output terminal 9 for transmitting an amplified receiver signal to a down-stream (down-stage) unit, and a transmitter-signal input terminal 10 for receiving a transmitter signal from an up-stream (up-stage) unit.

The signal input/output terminal 8 is connected to an antenna element 11 serving both as a transmitter and a receiver. The receiver-signal output terminal 9 and the transmitter-signal input terminal 10 are connected each to a phase shifter, not shown, for controlling the phase of passing signals, for example.

Further, although, as described hereinlater, the circulator 2 may be eliminated by arranging transmitter antenna and receiver antenna independently in place of the antenna element 11, in this and following embodiments, examples utilizing the antenna element 11 and the circulator 2 will be described.

The circulator 2 includes a transmitter-signal port 2a, a receiver-signal port 2b, and a common signal port 2c. The transmitter-signal port 2a is connected to the output side of the power amplifier 3. The receiver-signal port 2b is connected to the input side of the level monitor unit 6. The common signal port 2c is connected to the signal input/output terminal 8. The circulator 2 allows the transmitter signal applied to the transmitter-signal port 2a from the power amplifier 3 to pass through the common signal port 2c into the signal input/output terminal 8, and also allows the receiver signal applied from the signal input/output terminal 8 to the common signal port 2c to pass through the receiver-signal port 2b into the level monitor unit 6.

The power amplifier 3 amplifies a transmitter signal and sends it to the transmitter-signal port 2a of the circulator 2. Between the input side of the power amplifier 3 and the transmitter-signal input terminal 10, the variable attenuator 4 is connected. The variable attenuator 4 attenuates a transmitter signal applied from the up-stage unit to the transmitter-signal input terminal 10 by a predetermined amount under the control of the comparison-drive unit 7 and sends it to the power amplifier 3.

The low-noise amplifier 5 amplifies a receiver signal with low loss and sends it to the receiver-signal output terminal 9. Between the input side of the low-noise amplifier 5 and the receiver-signal port 2b of the circulator 2, the level monitor unit 6 is connected. The level monitor unit 6 monitors the level of a receiver signal sent from the receiver-signal port 2b of the circulator 2 to the low-noise amplifier 5 with little loss and sends the monitor results to the comparison-drive unit 7.

The comparison-drive unit 7 controls the attenuation of the variable attenuator 4 on the basis of the monitor results of the level monitor unit 6. In this embodiment, the attenuation of the variable attenuator 4 is controlled so as to increase when the monitor result of the level monitor unit 6 exceeds a specified level predetermined as a protection level.

The operation of the transmitter-receiver module 1 of the first embodiment of the above configuration will be described hereunder.

First, at the time of transmission, a transmitter signal applied to the transmitter-signal input terminal 10 is input to the variable attenuator 4. Here, assuming that a proper value, for example 6dB, is set as the attenuation of the variable attenuator 4, the transmitter signal is attenuated by the variable attenuator 4 according to the set value and is input into the power amplifier 3.

The power amplifier 3 amplifies the transmitter signal. The amplified transmitter signal is sent from the power amplifier 3 to the transmitter-signal port 2a of the circulator 2. The signal passes through the circulator 2 and is then output from the common signal port 2c of the circulator 2 to the signal input/output terminal 8. The signal is thus applied to the antenna element 11.

Next, on the other hand, at the time of reception, the receiver signal received by the antenna element 11 is sent to the signal input/output terminal 8. The receiver signal is sent from the signal input/output terminal 8 to the common signal port 2c of the circulator 2, passes through the circulator 2, and is sent from the receiver-signal port 2b of the circulator 2 to the level monitor unit 6.

In the level monitor unit 6, the receiver signal passes through the directional coupler 61 to the low-noise amplifier 5, and a part of the signal is branched by the directional coupler 61 to monitor the level of the receiver signal to be input to the low-noise amplifier 5. The receiver signal sent from the directional coupler 61 to the low-noise amplifier 5 is amplified with low loss, and output to the receiver-signal output terminal 9, and then sent to a down-stage unit.

On the other hand, the receiver signal branched by the directional coupler 61 is detected by the detector 62 into a level-monitor signal. The level-monitor signal is sent to the comparison-drive unit 7 as the result of monitoring of the level of the receiver signal to be input to the low-noise amplifier 5.

The comparison-drive unit 7 receives the level-monitor signal from the level-monitoring section 6 with the peak-hold circuit 71 to hold the level at a predetermined time constant and sends it to the comparator circuit 72. For the comparator circuit 72, a comparing value corresponding to the upper limit of the range, in which the level of the receiver signal to be input to the low-noise amplifier 5 does not become excessively high, is preliminarily set as a protection level. The comparator circuit 72 compares the protection level with the level of the level-monitor signal from the peak-hold circuit 71.

As a result of the comparison, when it is determined that the receiver signal to be input to the low-noise amplifier 5 is on an excessive level over the protection level, the attenuation of the variable attenuator 4 is increased to decrease the output level of the transmitter signal output from the power amplifier 3. That is, the comparator circuit 72 outputs a determination signal to the integrating circuit 73 on the basis of the comparison result, generates a drive signal for the variable attenuator 4 which is given at a predetermined time constant by the integrating circuit 73, and transmits the drive signal from the drive circuit 74 to the variable attenuator 4.

When the attenuation of the variable attenuator 4 is increased in response to the drive signal from the comparison-drive unit 7, the input level to the power amplifier 3 decreases, so that the level of the transmitter signal after being amplified by the power amplifier 3 also decreases. Accordingly, the level of the receiver signal that is a reflected wave of the transmitter signal also decreases, so that the level of the receiver signal to be input to the low-noise amplifier 5 falls within a proper range. Accordingly, the low-noise amplifier 5 can be protected from excessive input.

As described above, in the transmitter-receiver module according to this embodiment, the level of the receiver signal to be input to the low-noise amplifier 5 serving as the first-stage amplifier of the receiving system is monitored by the level monitor unit 6, and the result of monitoring is compared with a protection level, that is the upper limit, in which the input signal level does not become excessively high in the comparison-drive unit 7. When it is judged that the receiver signal is on an excessive level over the protection level, the attenuation of the variable attenuator 4 disposed on the input side of the power amplifier 3 is increased to thereby decrease the level of the transmitter signal after being amplified by the power amplifier 3. Thus, the level of the receiver signal, which is a reflected wave from an object or the antenna element itself, caused by the transmitter signal and the level of a partial detouring signal of the transmitter signal to the receiving side by the circulator can be made within a proper range. Thus, the low-noise amplifier 5 can be protected from excessive input.

In addition, in order to monitor the level of the receiver signal, the directional coupler 61 is disposed on the input side of the low-noise amplifier 5. The insertion loss of the directional coupler is, for example, about 1 dB lower than that at a time when a diode or another switching device is interposed on the input side of the amplifier to protect the low-noise amplifier 5. Therefore, the loss to the receiver signal can be further decreased in protecting the low-noise amplifier 5.

Furthermore, when the attenuation of the variable attenuator 4 is increased, the input level to the power amplifier 3 is decreased, so that the power amplifier 3 is derated. Thus, the distortion in an amplified transmitter signal can be decreased to provide preferable linearity and increase the reliability.

### [Second Embodiment]

Fig. 2 is a block diagram showing another example of transmitter-receiver module according to the second embodiment of the present invention.

The transmitter-receiver module 1 of this second embodiment differs from that of the first embodiment in the point that a variable power amplifier 3a is utilized instead of the power amplifier 3 of the first embodiment, and a current amplifying element 15 and a positive constant voltage source 20 are disposed and the variable attenuator 4 is eliminated. Structures other than the above are substantially the same as those of the first embodiment, so that the same reference numerals are added to the corresponding elements or units and the descriptions thereof are omitted herein.

As shown in Fig. 2, the output from the comparison-drive unit 7 is transmitted to a base input terminal of the current amplifying element 15. A collector terminal of the current amplifying element 15 is connected to the constant voltage source 20, and an emitter terminal thereof is connected to a positive power input side of the variable power amplifier 3a.

In the transmitter-receiver module of the above structure operates in the manner basically identical to that of the first embodiment mentioned above with reference to Fig. 1. Further, the transmitter signal given to the transmitter-receiver module 1 through the transmitter-signal input terminal 10 at the time of transmission is power amplified by the variable power amplifier 3a. The thus amplified transmitter signal is transmitted from the antenna element 11 through the transmitter-signal port 2a and the common signal port 2c.

As like in the first embodiment, in the case of a small distance between the transmitter-receiver module 1 and the object to be measured (reflector object), there is a possibility such that a disturbance is caused in the antenna pattern, the load VSWR at the transmission time of the transmitter-receiver module 1 is extremely deteriorated, and the transmitter waves passing through the transmitter-signal port 2a and the common signal port 2c of the circulator 2 are reflected by the antenna 11 and hence return to the signal receiving side through the common signal port 2c and the receiver-signal port 2b of the circulator 2. Moreover, the transmitter waves are branched and detected by the level monitor unit 6, and then, processed through the peak-hold circuit 71, the comparator circuit 72 and the integrating circuit 73 of the comparison-drive unit 7, and the output from the drive circuit 74 becomes small. Accordingly, the voltage at the base input terminal of the current amplifying element 15 is lowered, so that the emitter terminal voltage is also lowered. Further, even if the emitter terminal voltage is lowered, the constant voltage effects is not deteriorated because of the constant current amplifying rate of the current amplifying element 15.

As a result, saturated output power of the variable power amplifier 3a, and hence the transmission output power, is lowered, so that even if the load VSWR at the transmission time of the transmitter-receiver module 1 is extremely deteriorated, the input level of the low-noise amplifier 5 can be made small, thus preventing the low-noise amplifier 5 from being deteriorated or destroyed. Further, in order to obviate such defect, although a switch or limiter may be arranged on an upstream side of the low-noise amplifier 5, it provides such defect as that the maximum detection distance may be deteriorated by the insertion loss.

According to this second embodiment, there is provided the transmitter-receiver module provided with the voltage-variable protection circuit capable of preventing the deterioration or destroy of the low-noise amplifier without sacrificing the maximum detection distance.

### [Third Embodiment]

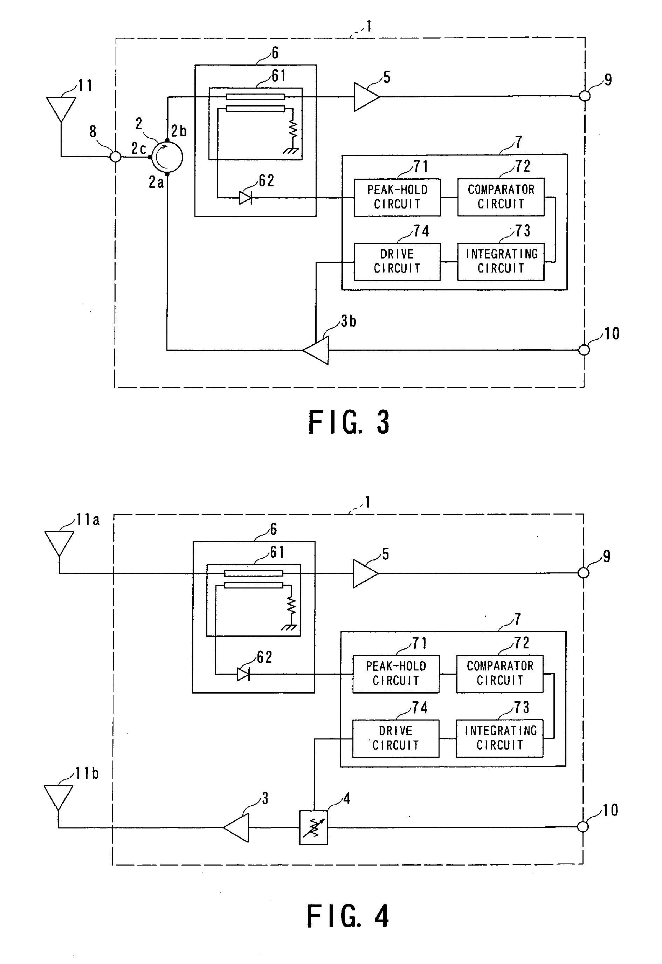

Fig. 3 is a block diagram showing a further example of transmitter-receiver module according to the third embodiment of the present invention.

The transmitter-receiver module 1 of this third embodiment differs from that of the first embodiment in the point that a variable gain power amplifier 3b is utilized instead of the power amplifier 3 of the first embodiment, and this variable gain power amplifier 3b also has a function of the variable attenuator, so that the variable attenuator 4 arranged in the first embodiment is eliminated. Structures other than the above are substantially the same as those of the first embodiment, so that the same reference numerals are added to the corresponding elements or units and the descriptions thereof are omitted herein.

In the transmitter-receiver module of the above structure operates in the manner basically identical to that of the first embodiment mentioned above with reference to Fig. 1. Further, the transmitter signal given to the transmitter-receiver module 1 through the transmitter-signal input terminal 10 at the time of transmission is power amplified by the variable gain power amplifier 3b. The thus amplified transmitter signal is transmitted from the antenna element 11 through the transmitter-signal port 2a and the common signal port 2c.

As like in the first embodiment, in the case of a small distance between the transmitter-receiver module 1 and the object to be measured (reflector object), there is a possibility such that a disturbance is caused in the antenna pattern, the load VSWR at the transmission time of the transmitter-receiver module 1 is extremely deteriorated, and the transmitter waves passing through the transmitter-signal port 2a and the common signal port 2c of the circulator 2 are reflected by the antenna 11 and hence return to the signal receiving side through the common signal port 2c and the receiver-signal port 2b of the circulator 2. Moreover, the transmitter waves are branched and detected by the level monitor unit 6, and then, processed through the peak-hold circuit 71, the comparator circuit 72 and the integrating circuit 73 of the comparison-drive unit 7, and the output from the drive circuit 74 becomes large. Accordingly, the gain of the variable gain power amplifier 3b is lowered and the transmission output power is also lowered, so that even if the load VSWR at the transmission time of the transmitter-receiver module is extremely lowered, the input level of the low-noise amplifier 5 can be made small and the deterioration or destroy of the low-noise amplifier 5 can be prevented. Further, in order to obviate such defect, although a switch or limiter may be arranged on an upstream side of the low-noise amplifier 5, it provides such defect as that the maximum detection distance may be deteriorated by the insertion loss.

According to this second embodiment, there is provided the transmitter-receiver module provided with the gain-variable protection circuit capable of preventing the deterioration or destroy of the low-noise amplifier without sacrificing the maximum detection distance.

Furthermore, in the foregoing embodiments, an active-phased array antenna is utilized for the antenna element 11, which is commonly utilized for the transmitter and receiver, but as shown in Fig. 4, in an alternation, a receiver antenna 11a and a transmitter antenna 11b may be independently arranged, and in such modification, the circulator 2 is eliminated.

That is, with reference to Fig. 4, in which the receiver antenna 11a and the transmitter antenna 11b are independently disposed to the embodiment of Fig. 1. The receiver antenna 11a is connected to the input side of the low-noise amplifier 5 through the level monitor unit 6, and the output of the low-noise amplifier 5 is transmitted to the receiver-signal output terminal 9. On the other hand, the transmitter-signal input terminal 10 is connected to the input side of the power amplifier 3 through the variable attenuator 4, and the output from the power amplifier 3 is communicated with the transmitter antenna 11b. The other structures are substantially the same as those of the first embodiment, and the descriptions thereof are omitted herein.

The output from the level monitor unit 6 is inputted to the comparison-drive unit 7 and the output therefrom is input to the variable attenuator 4. Here, in the case of a small distance between the transmitter-receiver module 1 and the object to be measured (reflector object), a disturbance will be caused in the antenna pattern, an isolation between the transmitter antenna 11b and the receiver antenna 11a is deteriorated, and the signal from the transmitter antenna 11b is hardly attenuated and inputted in the receiver antenna 11a. However, in the illustrated example, the transmission signal level is lowered by the cooperation of the level monitor unit 6 and the comparison-drive unit 7 including the variable attenuator 4. Accordingly, even if the isolation between the transmitter antenna 11b and the receiver antenna 11a is extremely deteriorated, the input level of the low-noise amplifier 5 can be made small to thereby prevent the deterioration or destroy of the low-noise amplifier 5. Thus, according to this example, there is also provided a radar system provided with the transmitter-receiver module capable of preventing the low-noise amplifier from being deteriorated or destroyed without sacrificing the maximum detection distance.

It is to be noted that the present invention is not limited to the described embodiments and many other changes and modifications may be made without departing from the scopes of the appended claims.

## Claims

1. A transmitter-receiver module comprising:
a first amplifier configured to amplify a transmitter signal;
a second amplifier configured to amplify a receiver signal;
a detection unit configured to detect the receiver signal amplified by the second amplifier; and
a control unit configured to control the first amplifier so as to reduce a level of the signal from the first amplifier when the signal detected by the detection unit exceeds a predetermined level.

2. The transmitter-receiver module according to claim 1, further comprising a signal attenuator configured to attenuate a signal amplified by the first amplifier, wherein the control unit controls the attenuator so as to increase an attenuation amount of the attenuator when the signal detected by the detection unit exceeds the predetermined level.

3. The transmitter-receiver module according to claim 1, wherein the first amplifier is a variable gain amplifier, which is controlled by the control unit.

4. The transmitter-receiver module according to claim 3, wherein the control unit includes a power source and a current amplifying element, the current amplifying element having an emitter terminal connected to a gain control terminal of the first amplifier, a collector terminal connected to the power source, and a base terminal by which the first amplifier is controlled.

5. The transmitter-receiver module according to claim 3, wherein the control unit controls a gain of the first amplifier.

6. The transmitter-receiver module according to claim 1, wherein the detection unit includes a directional coupler for branching the receiver signal amplified by the second amplifier and a wave detector detecting the branched receiver signal.

7. The transmitter-receiver module according to claim 1, wherein the control unit includes a peak-hold circuit holding the level of the receiver signal detected by the detection unit, a comparator circuit comparing the level held by the peak-hold circuit with the predetermined level, an integrating circuit integrating a compared result from the comparator circuit by a predetermined time constant, and a drive circuit controlling the signal from the first amplifier to be reduced in response to the signal from the integrating circuit.

8. The transmission-receiver module according to claim 1, wherein an output side of the first amplifier and an input side of the detection unit are connected to an external antenna through a circulator.

9. The transmitter-receiver module according to claim 1, wherein an output side of the first amplifier is connected to a first external antenna and an input side of the detection unit is connected to a second external antenna.

10. The transmitter-receiver module according to claim 1, wherein the receiver signal is a signal caused by the transmission of the transmitter signal.

11. A transmitter-receiver module comprising:
a transmitter-receiver switch unit having transmitter-signal port, receiver-signal port and common signal port, in which a transmitter signal given to the transmitter-signal port is sent to the common signal port at a time of transmission, and a receiver signal given to the common signal port is sent to the receiver-signal port at a time of reception;
a first amplifier connected, at an output side thereof, to the transmitter-signal port of the transmit-receive switch unit and configured to amplify the transmitter signal;
a comparison-drive unit including a variable attenuator connected to the input side of the first amplifier;
a second amplifier connected, at an input side thereof, to the receiver-signal port of the transmit-receive switch unit and configured to amplify the receiver signal; and
a level monitor unit monitoring a level of the receiver signal at the input side of the second amplifier,
wherein when a result of monitoring at the level monitor unit exceeds a preliminarily set level, the variable attenuator is controlled to increase an attenuation amount.

12. A radar system comprising:
a first amplifier configured to amplify a transmitter signal;
a second amplifier configured to amplify a receiver signal;
an antenna configured to transmit a signal amplified by the first amplifier and receive a receiver signal;
a detection unit configured to detect the receiver signal amplified by the second amplifier; and
a control unit configured to control the antenna so as to reduce a level of the signal from the antenna when the signal detected by the detection unit exceeds a predetermined level.

13. The radar system according to claim 12, wherein the antenna is an active-phased array antenna.
